(19) Europäisches Patentamt
European Patent Office
Office européen des brevets

(11) EP 0 947 558 B1

# (12) EUROPÄISCHE PATENTSCHRIFT

(45) Veröffentlichungstag und Bekanntmachung des Hinweises auf die Patenterteilung:
**20.08.2003 Patentblatt 2003/34**

(51) Int Cl.$^7$: **C08L 33/12**

(21) Anmeldenummer: **99106433.8**

(22) Anmeldetag: **29.03.1999**

(54) **Hochmolekulare Poly(meth)acrylatharze für Plastisole**

Poly(meth)acrylic resins with high molecular weight for use in plastisols

Résines (meth)acryliques à masse moléculaire élevée pour les plastisols

(84) Benannte Vertragsstaaten:
**AT BE CH DE DK ES FI FR GB GR IE IT LI NL PT SE**

(30) Priorität: **31.03.1998 DE 19814264**

(43) Veröffentlichungstag der Anmeldung:
**06.10.1999 Patentblatt 1999/40**

(73) Patentinhaber: **Röhm GmbH & Co. KG**
**64293 Darmstadt (DE)**

(72) Erfinder:
- **Löhden, Gerd, Dr.**
  **63457 Hanau (DE)**
- **Belik, Pavel, Dr.**
  **63517 Rodenbach (DE)**
- **Dorn, Klaus, Dr.**
  **63457 Hanau (DE)**
- **Schickel, Natascha**
  **63571 Gelnhausen (DE)**
- **Träbing, Mauren**
  **63452 Hanau (DE)**
- **Schneider, Georg**
  **63579 Freigericht (DE)**

(56) Entgegenhaltungen:
- **PATENT ABSTRACTS OF JAPAN vol. 098, no. 014, 31. Dezember 1998 & JP 10 231409 A (DAINIPPON INK &CHEM INC), 2. September 1998**
- **PATENT ABSTRACTS OF JAPAN vol. 095, no. 005, 30. Juni 1995 & JP 07 053934 A (MITSUBISHI RAYON CO LTD), 28. Februar 1995**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung richtet sich auf neue Plastisole mit verbesserten Eigenschaften sowie auf die Verwendung von vorteilhaften (Meth)acrylatharzmassen zur Herstellung der neuen Plastisole.

Plastisole stellen in der Regel zweiphasige Systeme dar, deren eine Komponente ein Kunststoff (Bindemittel) und die zweite ein geeigneter Weichmacher ist. Prinzipiell sind Bindemittel verschiedenster Kunststoffe denkbar, zur technischen Anwendung sind allerdings nur sehr wenige Kunststoffe gekommen. Die weitaus bedeutendste Klasse von Polymeren, die für diesen Zweck eingesetzt werden, leitet sich vom Polyvinylchlorid (PVC) ab. Aufgrund umweltrelevanter Gesichtspunkte ist der Einsatz von PVC jedoch bedenklich. Auch die Gefahr der Dioxinbildung im Brandfall und der damit in Zusammenhang stehenden Kontamination der Umgebung ist prohibitiv für den Einsatz von PVC.

Aus diesem Grund wird versucht Plastisole auf der Basis von Poly(meth)acrylaten herzustellen (vgl. DE-PS 934 498, FR-A 2,291,248, EP 0 774 483 A2).

Eine grundsätzliches Problem beim Einsatz der Poly(meth)acrylatplastisole stellt ihre im Vergleich zu den PVC-Plastisolen ungenügende Lagerstabilität und Mechanik dar.

Die Verwendung von sprühgetrockneten Emulsionspolymerisaten auf PMMA-Basis nach dem Stand der Technik führt in Kombination mit handelsüblichen Weichmachern zu guten Gelier- und Filmeigenschaften, aber auch zu einer geringen Lagerstabilität - die Produkte gelieren schon nach kurzer Zeit bei Raumtemperatur, was an einer Viskositätserhöhung zu erkennen ist.

Das Problem der Lagerstabilität wird u. a. in EP 0 774 483 dadurch zu lösen versucht, daß man die mittlere Teilchengröße anhebt, indem man den für Plastisole üblichen Emulsionspolymerisaten gemahlene Suspensionspolymerisate zusetzt. Nachteil dieses Verfahrens ist der Umstand, daß eine höhere Teilchengröße zu einem erschwerten Gelieren des Plastisols führt, da die größeren Suspensionspolymerisate u. U. nicht mehr vollständig in der kurzen Zeit gelieren, die in der Technik gefordert ist. Die durch das unvollständige Gelieren hervorgerufene Inhomogenität der Filme bedingt eine ungenügende mechanische Eigenschaften in Bezug auf Zugfestigkeit (Reißfestigkeit) der entsprechenden Filme. Nicht zu unterschätzen ist der optische Nachteil dieser inhomogenen Filme bei der Generierung glatter Oberflächen. Für das Herstellen und Zerkleinern der Suspensionspolymerisate sind zudem zusätzliche Arbeitsschritte notwendig, die zu einer Verteuerung des Produktes führen.

Von der Technik wird ebenfalls eine möglichst geringe Viskosität der Plastisole gefordert. Einerseits soll somit ein möglichst breites Spektrum der Verarbeitungstechniken und damit ein möglichst breiter Anwendungsbereich abgedeckt werden. Andererseits soll das Plastisol bei möglichst niedriger Temperatur verarbeitbar sein und erst bei einem Erwärmen und anschließendem Abkühlen soll das Plastisol zu einem festen einheitlichen Film gelieren.

Aufgabe der vorliegenden Erfindung ist es deshalb, ein Plastisol zu finden, das es erlaubt, gute Filmeigenschaften und Gelierfähigkeit die zu guten Zugfestigkeiten und Bruchdehnungseigenschaften des Produkts führen mit einer akzeptablem Lagerstabilität und niedrigen Viskosität zu kombinieren.

Diese und nicht näher genannte weitere Aufgaben, die sich jedoch für den Fachmann in naheliegender Weise aus dem Stand der Technik ergeben, werden erfindungsgemäß durch ein

Plastisol des Anspruchs 1 gelöst. Vorteilhafte Ausgestaltungen der erfindungsgemäßen Plastisole werden in den auf Anspruch 1 rückbezogenen Ansprüchen unter Schutz gestellt. Erfindungsgemäße Verwendungen der Plastisole werden in den entsprechenden Ansprüchen beschrieben.

Dadurch, daß Plastisole aufweisend

I. Polymerisate und/oder Copolymerisate von (Meth)acrylaten erhältlich durch Polymerisation von Mischungen enthaltend als polymerisierbare Bestandteile

A) 20 bis 100 Gew.-% Methylmethacrylat,

B) 0 bis 80 Gew.-% eines von Methylmethacrylat verschiedenen (Meth)acrylats der Formel I,

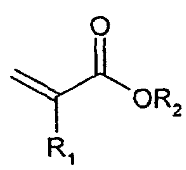 (I)

worin

$R_1$ für Wasserstoff oder Methyl und

$R_2$ für einen linearen oder verzweigten ($C_1$-$C_{18}$)Alkylrest steht,

C) 0 bis 40 Gew.-% eines weiteren von A) und B) verschiedenen Monomeren und

D) 0 bis 40 Gew.-% eines haftungsvermittelnden Monomeren

wobei A) bis D) 100 Gew.-% der polymerisierbaren Bestandteile ergeben,

II. auf 100 Gew.-Teile der Polymerisate und/oder Copolymerisate aus I. mit diesen verträgliche Weichmacher in Anteilen von 5 bis 400 Gew.-Teilen und

III. auf 100 Gew.-Teile der Komponente I. anorganische Füllstoffe in Mengen von 9 bis 700 Gew.-Teilen;

dadurch gekennzeichnet sind, daß das Gewichtsmittel des Molekulargewichts $\overline{M_W}$ der Polymerisate und/oder Copolymerisate der (Meth)acrylate >2.000.000 g/mol ist, gelingt es äußerst vorteilhaft und dennoch überraschend lagerstabile Plastisole mit einer geringen Viskosität herzustellen, die sich aufgrund der homogenen Filmbildung bei der Gelierung durch gute mechanische wie optische Eigenschaften auszeichnen. Die Polymerisate und/oder Copolymerisate sind bevorzugt durch Emulsionspolymerisation erhältlich.

Der Stand der Technik beschreibt die Verwendung von Emulsionspolymerisaten bis zu einem Molekulargewicht von 2.000.000 g/mol (EP 0 539 031 A1). Für technisch übliche PMMA-Plastisole werden Emulsionspolymerisate eingesetzt, die ein deutlich geringeres Molekulargewicht (<500.000 g/mol) aufweisen.

Im Stand der Technik sind Polymerisate und/oder Copolymerisate der eingesetzten (Meth)acrylate mit derart hohen Kettenlängen zur Herstellung von Plastisolen bisher nicht beschrieben worden. Darüber hinaus war es für den Fachmann keinesfalls naheliegend, daß durch die Verwendung von Polymerisaten und/oder Copolymerisaten von (Meth)acrylaten mit derart erhöhten Molekulargewichten die oben genannten vorteilhaften Plastisole erhalten werden können. Im Gegenteil wäre der Fachmann von der Vorstellung ausgegangen, daß eine Erhöhung des Molekulargewichts und damit der Kettenlänge der Polymeren zu einer Erhöhung der Viskosität der Plastisole führen würde. Dieses Verhalten konnte jedoch, wie aus Tabelle 1 hervorgeht, in umgekehrter Weise beobachtet werden.

Unter normalen Umständen führt eine Erhöhung der Molekulargewichte bzw. Kettenlängen bei Lösungen oder Emulsionen von Polymeren zudem zu einer schnelleren Entmischung und damit schlechterer Lagerstabilität. Wider Erwarten steigt die Lagerstabilität der Plastisole bei Erhöhung der Kettenlängen der Polymere jedoch an. Bei den erfindungsgemäßen Plastisolen wird eine wesentlich geringere Entmischungstendenz beobachtet wie bei Plastisolen mit Polymerisaten des Standes der Technik.

Bevorzugt werden in den erfindungsgemäßen Plastisolen (Meth)acrylate eingesetzt, worin der Rest $R_2$ des (Meth)acrylats der Formel I einen linearen oder verzweigten ($C_1$-$C_8$)-Alkylrest umfaßt.

Besonders vorteilhafte Eigenschaften der Plastisole erhält man, wenn das Gewichtsmittel des Molekulargewichts $\overline{M_W}$ der Polymerisate und/oder Copolymerisate des eingesetzten (Meth)acrylats in den Plastisolen >3.000.000 g/mol ist.

Ebenfalls beansprucht wird die erfinderische Verwendung der Polymerisate und/oder Copolymerisate der (Meth)acrylate mit einem Gewichtsmittel des Molekulargewichts $\overline{M_W}$ von >2.000.000 g/mol, bevorzugt >3.000.000 g/mol, zur Herstellung von Plastisolen.

Die Schreibweise "(Meth)acrylat" bedeutet im Rahmen der Erfindung Acrylat und/oder Methacrylat.

Die Kettenlängen der Polymerisate und/oder Copolymerisate der (Meth)acrylate wird durch die synthetisch machbare Kettenlänge begrenzt. Möglich erscheinen Kettenlängen, die Gewichtsmitteln des Molekulargewichts $\overline{M_W}$ von ca. 12.000.000 g/mol entsprechen.

Das Gewichtsmittel des Molekulargewichts $\overline{M_W}$ eines Polymeren wird für die Zwecke der Erfindung mittels SEC oder GPC (size exclusion chromatography oder gel permeations chromatography) gegenüber Standards aus Polystyrol bestimmt. Die SEC oder GPC sind dem Polymerfachmann bekannte Analysenmethoden zur Bestimmung der Mittelwerte des Molekulargewichts.

Eine weitere im Rahmen der Erfindung anwendbare Größe zur Kennzeichnung der Molmasse der eingesetzten Polymerisate und/oder Copolymerisate ist die Viskositätszahl VZ. Die Viskositätszahl wird in Anlehnung an DIN 51 562 Teil 1 und 3 (Stand Januar 1983 bzw. Mai 1985) bestimmt.

Erfindungsgemäße Plastisole enthalten Polymerisate und/oder Copolymerisate mit VZ ≥ 300, vorzugsweise > 300, zweckmäßig > 600, besonders bevorzugt > 900, ganz besonders bevorzugt > 1200.

Unter linearen oder verzweigtem ($C_1$-$C_{18}$)-Alkylrest versteht sich ein Umfang an Alkylresten, der angefangen bei Methyl-über Ethyl- bis hin zu einem 18-C-Atome umfassenden Radikal reicht. Mitumfaßt sind auch sämtliche Bindungsisomere, welche innerhalb der Gruppe denkbar sind.

Unter von A) und B) verschiedenen Monomere versteht der Fachmann Styrol und seine Derivate, Vinylester wie z. B. Vinylacetat, Vinylpropionat, Vinylester höherer Alkylsäuren, Maleinsäureanhydrid, Itaconsäure und seine Ester, Olefine wie z. B. Ethen, Propen, Isobuten etc.

Unter den haftungsverbessernden Monomeren HM als Bestandteile der Polymeren seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung kann z. B. durch Wasserstoffbrückenbildung, Komplexierung, Dipolkräfte u. ä. zustande kommen, an denen in der Regel Heteroatome wie Stickstoff oder Sauerstoff beteiligt sind. Genannt seien als funktionale Gruppen die Amino-, insbesondere die Dialkylamino-, (cyclische) Amid-, Imid-, Hydroxy-, Oxy-, Carboxyl-, Cyano-Gruppe. Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 1, pp. 394-400, J. Wiley 1978; DE-A 25 56 080; DE-A 26 34 003).

Vorzugsweise gehören die haftungsverbessernden Monomeren HM daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl- und der Aminoalkyl-substituierten Ester oder Amiden der Acryl- und Methacrylsäure an.

Als Stickstoff-heterocyclische Monomere HM seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinyl-imidazol (auch Vinyl-1-imidazol genannt), N-Vinylmethyl-2-imidazol, N-Vinyl-ethyl-2-imidazol, N-Vinylphenyl-2-imidazol, N-Vinyl-dimethyl-2,4-imidazol, N-Vinylbenzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol. Unter den copolymerisierbaren vinylischen Carbonsäuren seien insbesondere die Acryl- und die Methacrylsäure bzw. geeignete Salze derselben genannt.

Ferner seien die folgenden oxy- bzw. alkoxysubstituierten Alkylester der (Meth)acrylsäure angeführt:
2-Hydroxyethyl(meth)acrylat, Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmethacrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.

Weiterhin seien die folgenden aminsubstituierten Alkylester der (Meth)acrylsäure genannt:
2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomeren genannt:
N-Methyl(meth)acrylamid, N-Dimethylaminoethyl(meth)-acrylamid, N-Dimethylaminopropyl(meth)acrylamid, N-Isopropyl(meth)acrylamid, N-tert.-Butyl(meth)acrylamid, N-Isobutyl(meth)acrylamid, N-Decyl(meth)acrylamid,
N-Cyclohexyl(meth)acrylamid, N-[3-(Dimethylamino)2,2-dimethylpropyl]-methacrylamid, N-[2-Hydroxyethyl](meth)-acrylamid.

Die erfindungsgemäßen Plastisole enthalten an sich bekannte Weichmacher W in den dafür üblichen Mengen, beispielsweise für die PMMA-Plastisole (aber auch für PVC-Plastisole) üblichen Weichmacher, insbesondere Phthalsäureester, daneben Adipinsäure- und/oder Sebacinsäureester, chlorierte Paraffine, Trialkylphosphate, aliphatische oder araliphatische Polyester sowie sonstige polymere Weichmacher wie z. B. Harnstoffweichharze. (Vgl. H. K. Felger, Kunststoff-Handbuch Bd. 1/1C, Kanser-Verlag 1985 sowie in H. F. Mark et al. Encyclopedia of Polymer Science and Engineering, Supplemental Volume pg. 568-647, J. Wiley 1989). Eine Auswahl geeigneter Weichmacher kann auch der DE-C 25 43 542 entnommen werden. Vorzugsweise kommen Weichmacher bzw. Weichmacherkombinationen in Frage, die bei einer Lagerzeit der konfektionierten Plastisole über 3 Wochen bei 30 °C einen Viskositätsanstieg unter dem zehnfachen speziell unter dem fünffachen Wert der Ausgangsviskosität ergeben. Besonders erwähnt seien das Dioctylphthalat, Diisodecylphthalat, Diethylhexylphthalat, Di-$C_7$-$C_{11}$-n-alkylphthalat, Trikresylphosphat, Dibenzyltoluol (LIPINOL®T, Produkt der Fa. Hüls AG), 2,2,4-Trimethyl-1,3-pentandioldibenzoat (Benzoflex® 354, Produkt der Firma Velsicol) und Benzyloctylphthalat.

Weiterhin enthalten die Plastisole gewöhnlich noch an sich bekannte anorganische Füllstoffe in Mengen bis

zu 700 Gew.-Teilen. Genannt seien beispielsweise Calciumcarbonat (Kreide), Titandioxid, Titandioxid, Calciumoxid, Perlit, gefällte und gecoatete Kreiden als rheologisch wirksame Additive, ferner ggf. Thixotropierungsmittel wie z. B. pyrogene Kieselsäure. Die Korngröße liegt meist im Bereich 5 bis 25 Am. Die Plastisole können anwendungsbedingt noch an sich bekannte Hilfsstoffe wie Haftvermittler, Netzmittel, Stabilisatoren, Verlaufsmittel, Treibmittel in Anteilen von 0 bis 5 Gew.-% (bezogen auf die Plastisole) enthalten.

Erwähnt sei z. B. Calciumstearat als Verlaufsmittel.

Die erfindungsgemäßen Plastisole sind für sämtliche Anwendungen geeignet, wie sie für PVC- oder PMMA-Plastisole vorgezeichnet sind. Als solche kommen insbesondere in Betracht Laufschichten für Bodenbeläge, freie transparente Folien, KFZ-Unterbodenschutz, Korrosionsschutz für Metalle, Zwischenschichten für Bodenbeläge (geschäumt), Tapeten, Kunststoff-Planen, Autohimmel, Armaturenbrettverkleidungen, Kronkorken.

Grundsätzlich eignen sich die vorstehend angegebenen Monomere, insbesondere Methylmethacrylat, ggf. auch die Monomeren der Gruppe B, zur Herstellung der Kern-Schale-Polymerisate.

Der Aufbau der Polymerisate und/oder Copolymerisate aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um das Kernmaterial herum gelagert.

In der ersten Polymerisationsstufe, in der das Kernmaterial entsteht, werden 0,01 bis 3 Gew.-%, bezogen auf das Monomer an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 60 und 100 °C mit Hilfe wasserlöslicher Radikalbildner, wie Kalium- oder Ammoniumpersulfat oder Wasserstoffperoxyd, ausgelöst. Vor Beginn der zweiten Polymerisationsstufe kann erneut Initiator zugesetzt werden, jedoch wird wenig oder gar kein zusätzliches Emulgiermittel in der Zweiten Stufe verwendet.

Die folgenden Beispiele sollen die Erfindung verdeutlichen, sie jedoch keinesfalls einschränken.

Die Emulsionspolymere werden durch spezielle Verfahren, insbesondere nach den an sich bekannten sogenannten semibatch-Verfahren (Emulsionszulauf), synthetisiert, die es erlauben, sehr hochmolekulare Produkte zu erhalten. Das Molekulargewicht wird dabei vor allem durch zwei Parameter in die gewünschte Richtung gesteuert. Zum einen durch die Initiatormenge (in Kombination mit der Temperatur) und zum anderen durch die Dosiergeschwindigkeit des Monomers in der Hauptdosierung. Auf regelnde Zusätze wird verzichtet. Der Einsatz von Comonomeren wie oben beschrieben versteht sich für den Fachmann von selbst. Durch die Comonomerwahl können bestimmte Anforderungen der Technik auf verbesserte Weise eingehalten werden. Das nachfolgende Beispiel 1 beschreibt die Herstellung von Produkt B.

Beispiel 1:

Herstellung der Emulsionspolymerisate

In den 5L Reaktor einer Apparatur (Rührer, Rückflußkühler, Dosierpumpe, Wasserbad, Stickstoffatmosphäre) wird 1383 g VE (vollentsalztes) Wasser gegeben. Diese Vorlage wird unter Rühren durch das Wasserbad auf eine Innentemperatur von 73 °C - 75 °C gebracht.

In einer ersten Dosierung von ca. 1-10 Minuten wird eine Emulsion folgender Zusammensetzung, die unter Stickstoffatmosphäre hergestellt wurde, zur Vorlage gegeben: 141 g VE-Wasser; 4,4 g Disponil SUS IC® 875; 328,8 g Methylmethacrylat; 0,3 mL Natriumhydrogensulfit 5%ige Lsg.. Anschließend wird in den Reaktor ein RedoxSystem (2,3 mL Natriumperoxodisulfat 5%ige Lsg.; 1,5 mL Natriumhydrogensulfit 5%ige Lsg.)zugegeben, das die Polymerisation einleitet. Als sichtbare Folge der Dosierungen fällt die Innentemperatur stark ab, und steigt anschließend innerhalb von 2-20 Minuten über die anfängliche Innentemperatur von 73 °C - 75 °C. Einem Anstieg von über 75 °C - 77 °C wird durch eine Kühlung des Reaktors vorgebeugt.

Ist darauf folgend ein stärkerer Abfall der Innentemperatur durch eine fast vollständige Abreaktion der 1. Dosierung zu erkennen, wird eine zweite Emulsion folgender Zusammensetzung, die ebenfalls unter Stickstoffatmosphäre hergestellt wurde, innerhalb von 1-10 Minuten zudosiert: 140,9 g VE Wasser; 4,4 g Disponil SUS IC® 875; 328,6 g Methylmethacrylat; 0,32 mL Natriumhydrogensulfit 5%ige Lsg.. Wieder ist zuerst ein starker Abfall der Innentemperatur und ein anschließender Anstieg der Innentemperatur zu erkennen. Auch hier wird ein zu starker Temperaturanstieg von über 75 °C - 77 °C vermieden.

Fällt die Innentemperatur nach der fast vollständigen Abreaktion abermals sichtlich, wird die dritte Emulsion folgender Zusammensetzung (unter Stickstoffatmosphäre hergestellt) mit einer Dosiergeschwindigkeit von 55,4 g/Minute zugesetzt: 748,1 g VE Wasser; 23,2 g Disponil SUS IC® 875; 1745 g Methylmethacrylat; 1,68 mL Natriumhydrogensulfit 5%ige Lsg.. Nach Beginn der Dosierung ist abermals ein Temperaturabfall zu erkennen der allerdings schwächer als bei den vorangegangenen Dosierungen ausfällt. Eine eingesetzte Polymerisation der letzten Dosierung erkennt man an einem leichten Anstieg der Innentemperatur auf etwa 74 °C - 77 °C nach 5-20 Minuten.
Die Innentemperatur während dieser Dosierung ist, ggf. durch Kühlung, auf ca. 75 °C zu halten. Nach der vollständigen Zugabe der Emulsion wird eine Nachreaktionszeit von 30 Minuten bei einer Wasserbadtemperatur von 75 °C eingehalten. Das Produkt wird auf Raumtemperatur abgekühlt und über eine Gaze 125 µm filtriert. Die Dispersion wird bei einer Ausgangstemperatur von 75 °C sprühgetrocknet.

Die Produkte A, C und D wurden in Analogie zu Produkt B hergestellt, wobei durch Variation von Temperatur, Initatormenge und Dosiergeschwindigkeit folgende unterschiedlich viskose Produkte hergestellt wurden:

| Produkt | VZ = $\eta_{sp/c}$/g/m$^3$ | Temp. °C | Initiatormenge (5%ige-Natriumperoxodisulfat-Lösung) | Dosiergeschwindigkeit |
|---|---|---|---|---|
| A | 300 | 80 | 8,3 mL (Bisulfit: 5,4 mL) | 30 g/min |
| B | 995 | 75 | 2,3 mL (Bisulfit: 1,5 mL) | 55,4 g/min |
| C | 1489 | 75 | 1,8 mL (Bilsufit: 1,2 mL) | 65 g/min |
| D | 1780 | 75 | 1,2 mL (Bisulfit: 0,8 mL) | 70 g/min |

Die vorgelegte Menge Natriumhydrogensulfit-Lösung ist in einem festen Verhältnis zu der Natriumperoxodisulfatmenge. Soll heißen: wenn die Peroxodisulfatmenge verdoppelt wird, wird gleichzeitig die Menge an Natriumbisulfit verdoppelt.

Beispiel 2:

Herstellung der Plastisole

Die Polymeren (Produkt A bis D) wurden mit dem Weichmacher Benzoflex 354® (2,2,4-Trimethyl-1,3-pentandioldibenzoat, Hersteller Firma Velsicol Chemical Corporation) und gegebenenfalls Füllstoff Omya BSH (Kreide, Hersteller Omya Corporation) mit Hilfe eines Dispergators in einem Verhältnis gemischt, welches der folgenden Zusammenstellung zu entnehmen ist.

Für Messungen der Viskosität sowie Lagerstabilität:

| | |
|---|---|
| 40 Gew.-Teile | Polmyer |
| 60 Gew.-Teile | Benzoflex 354® |

Für Messungen der mechanischen Eigenschaften:

| | |
|---|---|
| 25 Gew.-Teile | Polymer |
| 45 Gew.-Teile | Benzoflex 354® |
| 30 Gew.-Teile | Omya BSH |

Die Plastisolmassen wurden mit einer Rakel aufgetragen und 30 Minuten bei 140 °C in einem Elektroofen geliert.

Untersucht wurde die Viskosität der Plastisolpasten sowie die Gelierungseigenschaften. Ferner wurden Zugfestigkeit und Bruchdehnung der gelierten Filme gemessen.

Die Messung der Pastenviskosität (Viskos [mPas]) wurde mit einem Brookfield-Viskosimeter nach DIN 53 018 Teil 1 und Teil 2 und DIN 53 019 Teil 1 ausgeführt.

Die Reißfestigkeit [kg/cm$^2$] sowie Bruchdehnung [%] der gelierten Filme wurden nach DIN 53 455 gemessen.

Die nachfolgende Tabelle faßt die Ergebnisse zusammen.

Tab.

| | Produkt A* | Produkt B | Produkt C | Produkt D | Vergl. 1 | Vergl. 2 |
|---|---|---|---|---|---|---|
| $\eta_{sp/c}$[$cm^3$/g] | 300 | 995 | 1489 | 1780 | 250 | 250/300 |
| $M_W \cdot 10^{-3}$ [g/mol] (GPC/ Polystyrolstandard) | 840 | 6500 | 7900 | 12800 | 560 | - |
| Schichtdicke [µm] | 3000 | 3000 | 3000 | 3000 | 3000 | 3000 |
| Gelierung 30 min/140°C | + | + | + | + | + ** | + |
| Viskos.[mPas] | | | | | | |
| 1h | 27270 | 12890 | 11900 | 10090 | 9870 | 14360 |
| 1 Tag | 51200 | 17600 | 13420 | 11200 | 12130 | 23010 |
| 2 Tage | 59730 | 16670 | 15690 | 12200 | 13400 | 27050 |
| 3 Tage | 59800 | 18870 | 15340 | 12020 | 13190 | 32200 |
| 6 Tage | 59470 | 18330 | 15400 | 13890 | 14050 | 32710 |
| Reißfest.[kg/$cm^2$] | 6 | 15 | 16 | 14 | 3 | 4 |
| Bruchdehnung [%] | 349 | 339 | 321 | 325 | 389 | 410 |

* :VZ des Supensionspolymerisatanteils 250
*Vergleichsprodukt
**:Gelierung gelang erst vollständig bei 30 min 150 °C

Vergleichsbeispiel 1 der Tabelle zeigt ein reines Suspensionspolymerisat auf MMA-Basis mit einer VZ von 250. Der mittlere Teilchendurchmesser betrug hier 15 µm.

Vergleichsbeispiel 2 der Tabelle zeigt ein gemischtes Polymerisat aus 60 % Emulsionsp. (VZ=300) und 40 % Suspensionsp. (VZ=250). Der mittlere Teilchendurchmesser betrug ebenfalls 15 µm.

## Patentansprüche

**1.** Plastisole aufweisend

I. Polymerisate und/oder Copolymerisate von (Meth)acrylaten erhältlich durch Polymerisation von Mischungen enthaltend als polymerisierbare Bestandteile

A) 20 bis 100 Gew.-% Methylmethacrylat,

B) 0 bis 80 Gew.-% eines von Methylmethacrylat verschiedenen (Meth)acrylats der Formel I,

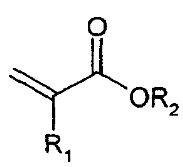

(I)

worin

$R_1$ für Wasserstoff oder Methyl und

$R_2$ für einen linearen oder verzweigten ($C_1$-$C_{18}$)Alkylrest steht,

C) 0 bis 40 Gew.-% eines weiteren von A) und B) verschiedenen Monomeren und

D) 0 bis 40 Gew.-% eines haftungsvermittelnden Monomeren,

wobei A) bis D) 100 Gew.-% der polymerisierbaren Bestandteile ergeben,

II. auf 100 Gew.-Teile der Polymerisate und/oder Copolymerisate aus I. mit diesen verträgliche Weichmacher in Anteilen von 5 bis 400 Gew.-Teilen und

III. auf 100 Gew.-Teile der Komponente I. anorganische Füllstoffe in Mengen von 9 bis 700 Gew.-Teilen;

**dadurch gekennzeichnet,**
**daß** das Gewichtsmittel des Molekulargewichts $\overline{M_W}$ der Polymerisate und/oder Copolymerisate der (Meth)acrylate >2.000.000 g/mol ist.

**2.** Plastisol nach Anspruch 1,
**dadurch gekennzeichnet,**
**daß** der Rest $R^2$ des (Meth)acrylats der Formel I einen linearen oder verzweigten ($C_1$-$C_8$)-Alkylrest umfaßt.

**3.** Plastisol nach Anspruch 1 und 2,
**dadurch gekennzeichnet,**
**daß** das Gewichtsmittel des Molekulargewichts $\overline{M_W}$ der Polymerisate und/oder Copolymerisate der (Meth)acrylate >3.000.000 g/mol ist.

**4.** Verwendung von Polymerisaten und/oder Copolymerisaten von (Meth)acrylaten mit einem Gewichtsmittel des Molekulargewichts $\overline{M_W}$ von >2.000.000 g/mol zur Herstellung von Plastisolen.

**5.** Verwendung nach Anspruch 4,
**dadurch gekennzeichnet,**
**daß** das Gewichtsmittel des Molekulargewichts $\overline{M_W}$ der Polymerisate und/oder Copolymerisate der (Meth)acrylate >3.000.000 g/mol ist.

## Claims

**1.** Plastisols comprising

I. polymers and/or copolymers of (meth)acrylates obtainable by polymerisation of mixtures containing as polymerisable ingredients

A) 20 to 100 wt% of methylmethacrylate,

B) 0 to 80 wt% of a (meth)acrylate of formula I other than methyl methacrylate,

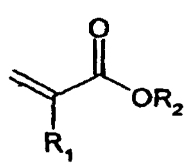

(I)

wherein

$R_1$ denotes hydrogen or methyl and

$R_2$ denotes a straight-chain or branched $C_1$-$C_{18}$ alkyl group,

C) 0 to 40% wt% of another monomer different from A) and B) and

D) 0 to 40 wt% of an adhesion-promoting monomer,

where A) to D) together make up 100 wt% of the polymerisable ingredients,

II. to 100 parts by weight of the polymers and/or copolymers from I., plasticisers compatible therewith in amounts from 5 to 400 parts by weight and
III. to 100 parts by weight of component I., inorganic fillers in amounts of 9 to 700 parts by weight;

**characterised in that** the weight average of the molecular weight $\overline{M}_w$ of the polymers and/or copolymers of the (meth)acrylates is >2,000,000 g/mol.

2. Plastisol according to claim 1, **characterised in that** the group $R^2$ of the (meth)acrylate of formula I comprises a straight-chain or branched $C_1$-$C_8$ alkyl group.

3. Plastisol according to claims 1 and 2,
**characterised in that** the weight average of the molecular weight $\overline{M}_w$ of the polymers and/or copolymers of the (meth)acrylate is >3,000,000 g/mol.

4. Use of polymers and/or copolymers of
(meth)acrylates with a weight average of the molecular weight $\overline{M}_w$ of >2,000,000 g/mol for preparing plastisols.

5. Use according to claim 4, **characterised in that** the weight average of the molecular weight $\overline{M}_w$ of the polymers and/or copolymers of the (meth)acrylates is >3,000,000 g/mol.

## Revendications

1. Plastisol comprenant

I. des polymérisats et/ou des copolymérisats de (méth)acrylates accessibles par polymérisation de mélanges contenant comme constituants polymérisables :

A) de 20 à 100 % en poids de méthacrylate de méthyle,
B) de 0 à 80 % en poids d'un (méth)acrylate différent du méthacrylate de méthyle, de formule I

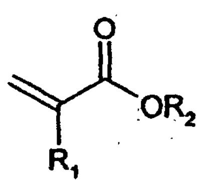 (I)

dans laquelle $R_1$ représente de l'hydrogène ou un méthyle et $R_2$ représente un reste alkyle en $C_1$-$C_{18}$ linéaire ou ramifié,
C) de 0 à 40 % en poids d'un autre monomère différent de A) et de B) et
D) de 0 à 40 % en poids d'un monomère qui favorise l'adhésion A à D faisant 100 % en poids des constituants polymérisables,

II. pour 100 parties en poids des polymérisats et/ou copolymérisats de I, des agents plastifiants compatibles avec ceux-ci en quantités allant de 5 à 400 parties en poids, et
III. pour 100 parties en poids du composant I, des substances de charges anorganiques en quantités allant de 9 à 700 parties en poids,

**caractérisé en ce que**
la moyenne pondérale, de poids moléculaire $\overline{M_W}$ des polymérisats et/ou des copolymérisats des (méth)acrylates est > 2.000.000 g/mol.

**2.** Plastisol selon la revendication 1,
**caractérisé en ce que**
les reste $R^2$ du (méth)acrylate de formule I comprend un reste alkyle en ($C_1$ - $C_8$) linéaire ou ramifié.

**3.** Plastisol selon la revendication 1 et la revendication 2,
**caractérisé en ce que**
la moyenne pondérale du poids moléculaire $\overline{M_W}$ des polymérisats et/ou copolymérisats des (méth)acrylates est > 3.000.000 g/mol.

**4.** Utilisation de polymérisats et/ou de copolymérisats de (meth)acrylates ayant une moyenne pondérale de poids moléculaire $\overline{M_w}$ de 2.000.000 g/mol, en vue de la production de plastisols.

**5.** Utilisation selon la revendication 4,
**caractérisé en ce que**
la moyenne pondérale du poids moléculaire $\overline{M_w}$ des polymérisats et/ou des copolymérisats des (méth)acrylates est > 3.000.000 g/mol.